# EUROPEAN PATENT SPECIFICATION

(11) **EP 2 842 207 B1**
(45) Date of publication and mention of the grant of the patent: **04.04.2018**
(21) Application number: 12728129.3
(22) Date of filing: 24.04.2012
(51) Int. Cl.: H02G 3/04, H02G 5/00

(54) **ADAPTABLE PREFABRICATED LAMINATED BUSBARSYSTEM WITH PROVISON TO SELECTIVELY PROVIDE FIREPROOF PANELS.**
ANPASSBARES VORGEFERTIGTES LAMINIERTES STROMSCHIENENSYSTEM MIT SELEKTIVER BEREITSTELLUNG FEUERFESTER PLATTEN
SYSTÈME DE BARRE OMNIBUS STRATIFIÉ, PRÉFABRIQUÉ ET ADAPTABLE DOTÉ D'UNE FONCTION PERMETTANT DE FOURNIR DE FAÇON SÉLECTIVE DES PANNEAUX IGNIFUGES

(43) Date of publication of application: 04.03.2015
(73) Proprietor: IAM Industrial Asset Management S.r.l., 25039 Travagliato (BS) (IT)
(72) Inventor: REGOSA, Mattia, I-25133 Brescia (IT)
(74) Representative: Galassi, Alessandro
(86) International application number: PCT/IT2012/000121
(87) International publication number: WO 2013/160921

(56) References cited:
- EP-A1- 1 474 855
- EP-A1- 2 113 976
- EP-A2- 0 106 535
- CH-A- 435 396
- US-A- 4 735 577
- US-A- 5 466 889

## Description

### Field of the Invention

In its most general aspect, the present invention relates to the field of busways, also referred to as busbars.

In particular, the invention relates to a profiled member adapted for forming a casing for a busway, as well as to a casing made with said profiled member.

### State of the Art

Busways are power lines extending through the space along specified paths. They usually consist of straight and angular conductive members sequentially joined to follow the desired path and laid down with the aid of various components and accessories. The created path is used to transfer electric current in general as well as to deliver electric current to users connected thereto through withdrawal branches.

The conductive members cooperating for forming these busways may be different in length and are preferably modular in nature, and they usually consists of a channel-shaped casing defining a housing, current conductor rails arranged parallel to one another inside the housing and extending longitudinally in the casing, and at least one cover or closing member for the housing which is secured to an open side of the channel-shaped casing by welding.

The conductor rails include phase bars, neutral bars and, if needed, a ground bar as a protective conductor. All the bars are enclosed in an insulating sheath to prevent a direct contact therebetween.

In order to form a continuous electrical path according to the desired pattern, more conductive members are connected and consecutively joined to each other by means of electrical connection blocks. These blocks include electrical conductors intervening between the bars of every two adjacent conductive members and mechanically packed - clamped by means of flanges to be attached - usually through screws - to the casings of the contiguous conductive members. The electrical connection is completed by a locking bolt passing through the connection block and screwed thereto to create a clamping torque in order to ensure a close contact between the conductor rails of the conductive members and the relevant connection block.

In order to deliver current to users, certain conductive members are adapted to be connected to a junction box. For each branch point there is an opening in the bottom and/or in the cover of the casing, and the conductor rails are diverted at said opening to be coupled to and interposed with the conductive members of the branch box.

Generally, a casing for the conductive members intended for forming the busways has been made in carpentry and configured to follow the path of the bars even when branches are provided. A casing construed in this way does not allow to obtain smooth side surfaces and, furthermore, it is laborious, expensive and disadvantageous to be made.

Another solution proposed by the prior art is disclosed in document EP 0 106 535, which describes an electrical path comprising an elongated channel or main body and a front cover which can be formed by extrusion. The main body may be provided with two side walls and two inner walls, the inner walls and the side walls being not connected at the top thereof, and the cover being snap-applied on support brackets or to the conduit itself through intermediate means.

Document EP 1 474 855 describes a casing for busways, comprising a main body and a closing member or cover complementary thereto which are obtained by extrusion, the main body having a base wall from which two interior walls extend upwards at right angles and separated at their top to define an upwardly open central channel therebetween, and two outer side walls, each of the side walls being joined to the adjacent inner wall at the top thereof, and wherein the cover rests on and is attached to the top of the internal and external walls to close the upper opening of the channel.

A further solution made available in the prior art is described in document DE 10 2008 056 484, which relates to a profiled member for accommodating a connection block for conductor rails of two conductive members, comprising a pair of side walls combined with and movable with respect to a cover and substantially constituting two respective half-shells provided with members adapted for applying a pressure to the connection block.

Further solutions provided in the prior art are described in documents US 4 804 804 and US 5 466 889, which relate to casings for busways wherein, in the first of these documents, the casing essentially comprises two profiled members with a substantially "I"-shaped cross-section, which are combined with each other to form a compartment for the conductor rails, by means of so-called "snap-fit" connections provided along one end of the upper and lower walls of the profiled members themselves, whereas, in the second of these documents, the casing comprises two profiled members also with a substantially "I"-shaped section, which are combined by means of a pair of upper and lower plates constrained to the respective inner surfaces of the side walls of the profiled members through screws or "snap-fit" connections.

Furthermore, document US 4 735 577 describes a casing comprising an extruded member made of an insulating material, e.g. plastic, which defines a housing through which a conductive member is passed, said casing being provided with closure plates at the ends thereof and being provided with an upper wall having a plurality of openings for accommodating the respective electrical connections, and further comprising a cover for partially or completely closing the openings provided in the upper wall.

Document CH435396A describes a channel destined to receive electrical cables and corresponding connection organs such as, for example, sockets, switches, fuses, pilot lights.

The channel according to CH435396A has a C cross section with a longitudinal side opening, which is closed by a plate to complete the channel. The side plate is provided with cables and connection devices.

All the above-described solutions provided in the prior art fulfill their purposes, however they are not free from drawbacks, including the main drawback that the casing or the profiled members constituting the casing are structurally complex, which makes the, casing costly to be implemented and poorly versatile, limiting its use to a single mode of use.

In other words, the above-considered profiled members for casings provided in the prior art can be combined with each other according to a single coupling mode, and thus, the casing itself can be used in a single configuration.

It is also to be noted that the installation of certain electrical systems requires only a so-called standard fire resistance, whereas other installations of busways require a fire resistance higher than the standard fire resistance which is generally achieved by equipping the conductive members with fireproof panels.

Now, equipping a casing according to the above-mentioned prior art with fireproof panels in order to increase its fire resistance is particularly cumbersome, since such a casing, or the profiled members constituting the same, are substantially not suitable to accommodate these panels if not by means of additional finishing members. Furthermore, the above-mentioned problem is even exacerbated when the busway is already assembled.

In fact, the fireproof panels should be usually positioned between the conductor rails and the side walls of the casing. However, some of the above-described casings of the known type provide that the fireproof panels, when needed, can be inserted into the casing only along the longitudinal direction from one end to the other of the casing or busway, resulting in a great amount of labor and the risk that the fireproof material is not evenly distributed, while others of the above-considered casings do not comprise an effective housing for the fireproof panels, and still others of the above-illustrated casings require the use of additional finishing members and the adaptation of the profiled members constituting the casing thereto for a fire resistance higher than the standard one. Essentially, according to the prior art, the casings have to be manufactured and provided with a different configuration depending upon whether they have to be equipped or not with fireproof panels, resulting in clear disadvantages from management and economic points of view.

### Objects and summary of the invention

An object of this invention is to remedy the above-mentioned drawbacks of the prior art, and particularly to propose casings of busways which are simple to be manufactured, strong, and also easy to be equipped with fireproof panels.

Another object of the present invention is to provide a casing for busways which is economically advantageous to be manufactured and adapted for preserving the advantages of the known casings while being able to be used for the setup of busways having a different rate of fire resistance, whether it is standard or increased, as necessary.
According to the invention, the above objects are achieved by a casing for subways, as defined by claim 1, comprising profiled members having a first wall and a second wall defining a first pair of mutually opposite and parallel walls, actually a pair of side walls, and further having a third wall and a fourth wall, each extending between said first wall and said second wall, which define a second pair of mutually opposite and parallel walls, essentially a.pair of joining walls including an upper wall and a lower wall, wherein said first and second pairs of walls delimit a longitudinal channel, and wherein one of said first and second walls is provided with an opening longitudinally extending according to the length of the profiled member and interposed between said third and fourth walls and arranged at predetermined relative distances therefrom, said opening having a height lower than said first or second side wall.

Essentially, said profiled member consists of a box-like body, formed by said two pairs of walls, which defines said longitudinal channel in which said opening is preferably extended along the entire length of the longitudinal channel and therefore of the box-like body, more preferably at a middle position equally spaced from said third and fourth walls, still more preferably with a height equal to about one third of the height of said first or second wall.

Advantageously, both the first wall and the second wall include, at a portion adjacent to the third and fourth walls, a step extending parallel to said opening.

Preferably, the present profiled member includes at least one coupling member combined with at least one of said walls and extending parallel to said opening along the entire length of the profiled member.

Preferably, there are provided at least one coupling member of the above type combined with at least one of said first or second walls, and at least one coupling member of the above type combined with each of said third and fourth walls, said coupling members being preferably arranged at positions symmetrical to each other.
More preferably, there are provided a pair of coupling members of the above type combined with each of said third and fourth walls and arranged in positions symmetrical to each other, and still preferably, there are provided a pair of coupling members of the above type combined with that of said first or second wall which is provided with said opening, and arranged in positions symmetrical to each other, more preferably arranged adjacent to the opening.

Preferably, said at least one coupling member is formed integral with the body of the profiled member, i.e. with the respective wall to which it is combined, and it has a polygonal or circular section which can be open or closed.

According to the invention, in the profiled member, said at least one coupling member can be either internal or external to said longitudinal channel, and furthermore, there can be provided a combination of coupling members of the above type which are internal and external to the longitudinal channel, as well as a combination of coupling members of the above type having different sections from each other.

Still according to the invention, the profiled member may comprise one or more coupling members of the above type jutting from the wall/s of the profiled member, and/ or coupling members of the above type in the form of grooves or throats obtained in said walls of the profiled member.

Preferably, there are provided a pair of coupling members of the afore said type, i.e. extending parallel to the opening of the profiled member along the entire length thereof at positions symmetrical to each other, which are external to said longitudinal channel and in the form of grooves or throats in each of said third and fourth walls of the profiled member, and a pair of coupling members extending parallel to the opening of the profiled member along the entire length thereof at positions symmetrical to each other, which are internal to the longitudinal channel of the profiled member and jutting from at least the afore said wall of the profiled member which is provided with the opening.

Still preferably, the profiled member is made in one piece, for example by extrusion. Furthermore, the profiled member, and actually said longitudinal channel, also defines a compartment for receiving one or more fireproof panels which can be advantageously accessed through said side opening.

Essentially, according to the invention, a casing for busways having essentially a C-shaped cross-section, i.e. having a closed side wall and a longitudinally open side wall, is provided, and still according to the invention, two profiled members can be employed to form a casing of the above type according to two different use modes: precisely, with a configuration: defined as a closed configuration, and with a configuration defined as an open configuration.

Thus, the present invention provides a casing for a busway, comprising two of the afore said profiled members and combining means for assembling the two profiled members, wherein the two profiled members are arranged at a predetermined distance from each other to form a compartment for accommodating a plurality of conductor rails, and wherein said combining means also constitute means for closing said compartment and means for associating at least the devices usually employed for the implementation of busways.

Advantageously, in the casing according to the invention, both these two profiled members can be arranged either with their respective opening directed towards the compartment for the conductor rails, or with their opening directed away from said compartment, i.e. on the side towards the outside of the casing.

When the opening of the two combined profiled members is disposed towards the compartment for the conductor rails, the casing has a so-called closed configuration and provides a standard fire resistance of about 30 minutes at 750°C [E/30].

When the openings of the two profiled members combined to each other are arranged away from the compartment for the conductor rails, i.e. towards the outside, the casing has a so-called open-side configuration and can be easily equipped with special fireproof panels inserted through the opening of each profiled member in order to ensure a fire. resistance in the range from 90 to 120 minutes at 750°C [E/90-120].

Advantageously, in this second configuration, the openings directed towards the outside can be closed with covers secured to the two profiled members either by welding or by fastening means such as nails or screws.

Preferably, said combining/ closing means comprise, in both the above open and closed configurations, a pair of auxiliary profiled members arranged mutually opposite with respect to the two profiled members of the casing, each having a central wall and opposite right-angle end portions fitting with the steps formed along the first or second side walls of the profiled members constituting the casing.

### Brief Description of the Drawings

Further characteristics and advantages of the present invention will be apparent from the following description of some preferred embodiments, given for illustration purposes and without limitation, with reference to the accompanying drawings in which:
- Figure 1 shows a perspective view of a profiled member adapted for forming a casing for a busway according to the present invention;
- Figure 2 shows a perspective view, in reduced scale, of a busway comprising a casing formed according to a first mode of use of the profiled member of Figure 1;
- Figure 3 shows a cross-sectional view, in enlarged scale, of the busway of Figure 2;
- Figure 4 shows a cross-sectional view, in enlarged scale, of a busway comprising a casing made according to a second mode of use of the profiled member of Figure 1;
- Figure 5 shows a cross-sectional view of the profiled member of Figure 1 according to a variation of the embodiment of the invention;
- Figure 6 shows a cross-sectional view of a busway comprising a casing made according to a first mode of use of the profiled member of Figure 5;
- Figure 7 shows a cross-sectional view of a busway comprising a casing made according to a second mode of use of the profiled member of Figure 5.
- Figure 8 shows a cross-sectional view, in enlarged scale, of the profiled member of Figure 1 according to another variation of the embodiment of the invention.

### Detailed description of the invention

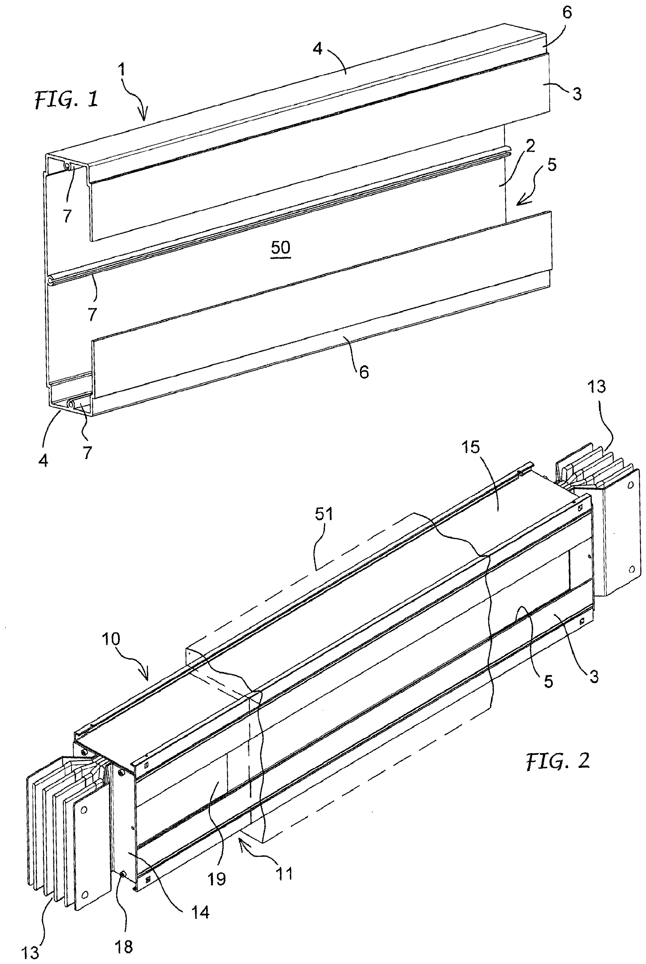

With reference to Figure 1, a profiled member adapted for forming a casing for a busway is generally designated by numeral 1. The profiled member 1 consists of a box-like body essentially comprising two mutually opposite and parallel side walls, namely a first wall designated by numeral 2 and a second wall designated by numeral 3, and two walls interposed and extending between the side walls, practically two joining walls, one upper wall and one lower wall, both designated by numeral 4, which are also opposite and parallel to each other.

According to a first aspect of the invention, the profiled member 1 has an opening in one of the side walls, in the example of Figure 1 the second longitudinally extending wall 3 designated by numeral 5.

The opening 5 extends along the entire length of the profiled member 1 at a middle position of the second wall 3 which is preferably equally spaced from the third and fourth walls, however, such an opening can also extend along less than the length of the profiled member or it can be located at an offset position with respect to said middle position. The opening 5 can have a height of approximately one third of the box-like body, i.e., in this specific case, of one third of the second wall 3.

The so-configured profiled member 1 longitudinally delimits a channel 50 which can be accessed from one side through the opening 5.

Both the first and second walls 2 and 3 comprise, at positions adjacent to the third and fourth walls 4, end portions which define a respective step 6 extending parallel to the opening 5.

In particular, the step 6 is provided so that the box-like body has, at the upper and lower walls, i.e. the third and fourth walls 4, a width smaller than the distance between the first and second side walls 2 and 3, i.e. smaller than the width of the central portion of the body itself.

Still according to the invention, the profiled member 1 comprises coupling members, designated by numeral 7, which extend inside the longitudinal channel 50, i.e. inside the box-like body.

Particularly, in the example of Figure 1, the profiled member 1 comprises a coupling member jutting from the first side wall 2 towards the inside of the longitudinal channel 50 and arranged at a middle position opposite to the opening 5, and a coupling member 7 jutting by each of the third and fourth walls 4 at middle positions symmetrical to each other, however, it is also possible to provide such a coupling member jutting from only one of said walls, or more coupling members combined with the same wall or arranged in a different manner.

Each coupling member 7 extends along the entire length of the profiled member 1 and preferably, as shown in Figure 1, it has the form of a jut having a circular section, particularly an open circular cross-section, and formed integral with the profiled member or box-like body, however, alternatively or in addition to the circular section illustrated in the examples of the Figures, it is also possible to provide a different section, for example a closed or open polygonal section, as well as, still alternatively or in addition to the above, it is possible to provide coupling members in the form of grooves or throats formed in the walls of the profiled member, even external to the longitudinal channel, as will become evident in the following.

In this respect, it has to be mentioned that the entire profiled member according to the invention is preferably made in one piece, for example by extrusion.

The profiled member 1 described above is also shown in the examples of Figures 2-3 as a means for making a casing of a conductive member for forming busways.

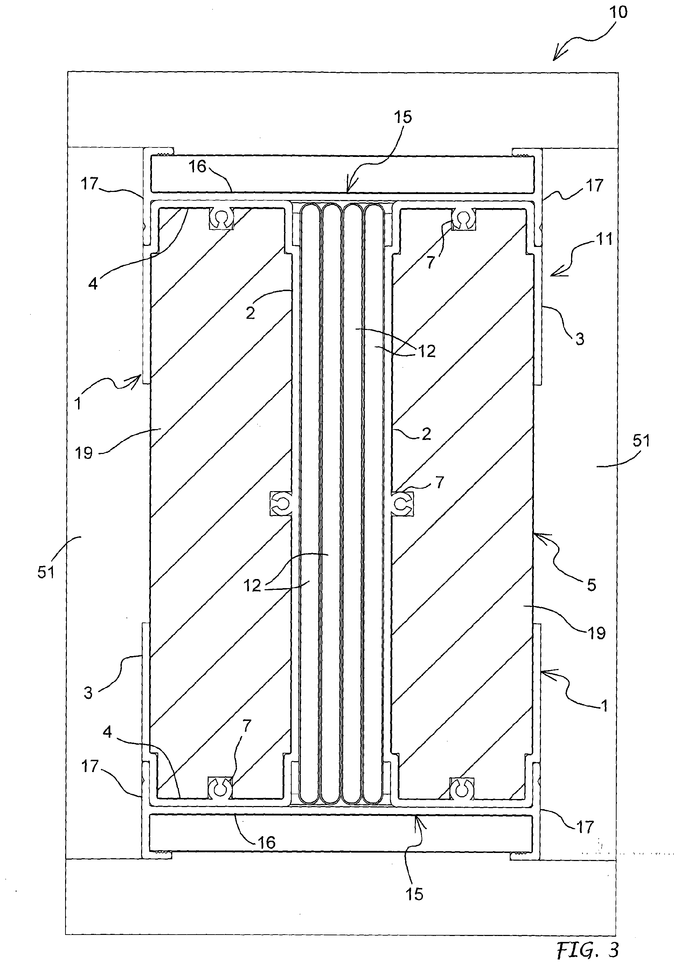

In particular, Figures 2 and 3 show a conductive member 10 essentially comprising a casing 11, a plurality of conductor rails 12, in the example of the Figure, four conductor rails with respective connecting terminals 13 diverging from each other, and head covers 14 for closing the ends of the casing 11.

In detail, the casing 11 consists of two profiled members 1 located at a predetermined distance from each other to form a compartment for the conductor rails 12 and assembled by combining means external to the profiled members 1 and formed as a pair of auxiliary profiled members 15 each having a central wall 16 and right-angle end portions 17 fitting with a step 6 of the side walls of a respective profiled member 1, in the example of the above Figures, the second walls 3 provided with the opening 5.

Essentially, the two auxiliary profiled members 15 are arranged on a plane orthogonal to the two profiled members 1 so as to close the top and bottom of the compartment for the conductor rails 12.

It has to be noted that the auxiliary profiled members 15 also serve as means for hanging otherwise operatively securing in position the busways when installed.

As mentioned above, the casing 11 has combined thereto covers for closing the ends thereof, i.e. the head covers mentioned above and designed by numeral 14, which are advantageously secured to the profiled members 1 through suitable fastening means 18, for example screws, which engage the coupling members 7 of the profiled members 1.

The casing 11 as illustrated in Figures 2 and 3 has a so-called open-side configuration in which the two profiled members 1 are arranged one in front of the other with the respective openings 5 directed outwards, i.e. away from the compartment for the conductor rails 12.

In this configuration, the channels 50 defined by the box-like bodies of the two profiled members 1 can be easily accessed through the respective openings 5 in order to insert therein one or more fireproof panels made of a thixotropic material and designed by numeral 19.

In this case, the casing according to the invention provides a fire resistance of 90/120 minutes at 750°C, i.e. greater than the standard fire resistance.

In the open configuration, the side openings 5, and therefore also the channels 50 of the profiled members 1 of the casing 11, can be closed by closure panels not illustrated in the Figures, which instead show a protective enclosure designed by numeral 51 and positioned around the casing 11 of the conductive member 10.

Particularly, the protective enclosure 51 as partially shown with dashed lines in the example of Figure 2 can be provided as an accessory member, if required.

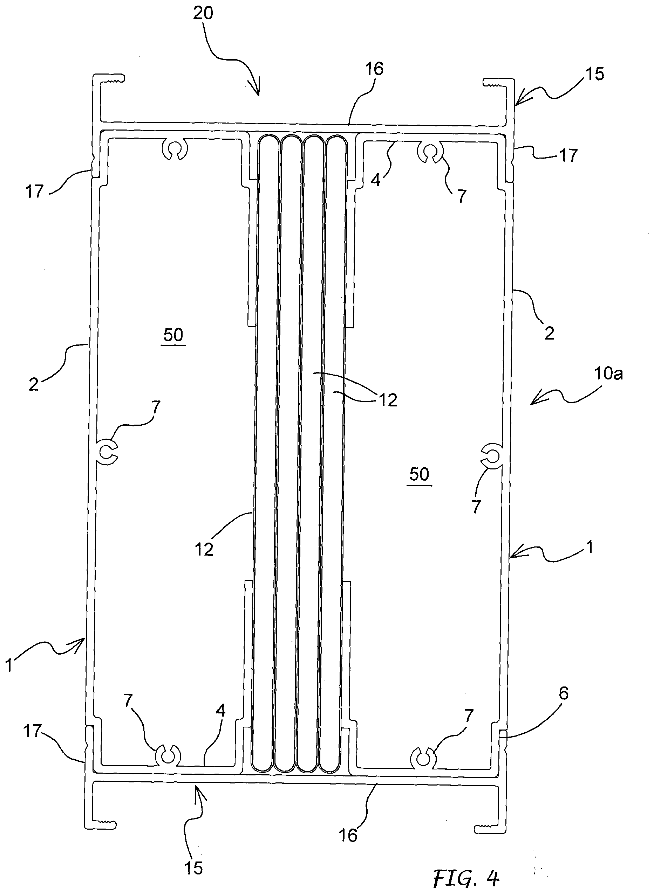

For a standard fire resistance, i.e. for a fire resistance of about 30 minutes at 750°C, a casing according to the present invention can be set up in a so-called closed configuration as shown in the example of Figure 4, in which parts structurally and functionally corresponding to those of the casing 11 described above are given the same reference numerals.

Particularly, the example of Figure 4 shows a cross-section of a conductive member 10a adapted for forming busways, comprising a casing 20 similar to the casing 11 described above, but in which two profiled members 1 are assembled with the respective openings 5 directed towards the compartment for the conductor rails 12.

In this case, the right-angle end portions 17 of the auxiliary profiled members 15 of the casing 20 fit with the steps 6 of the first side walls 2 of the profiled members 1.

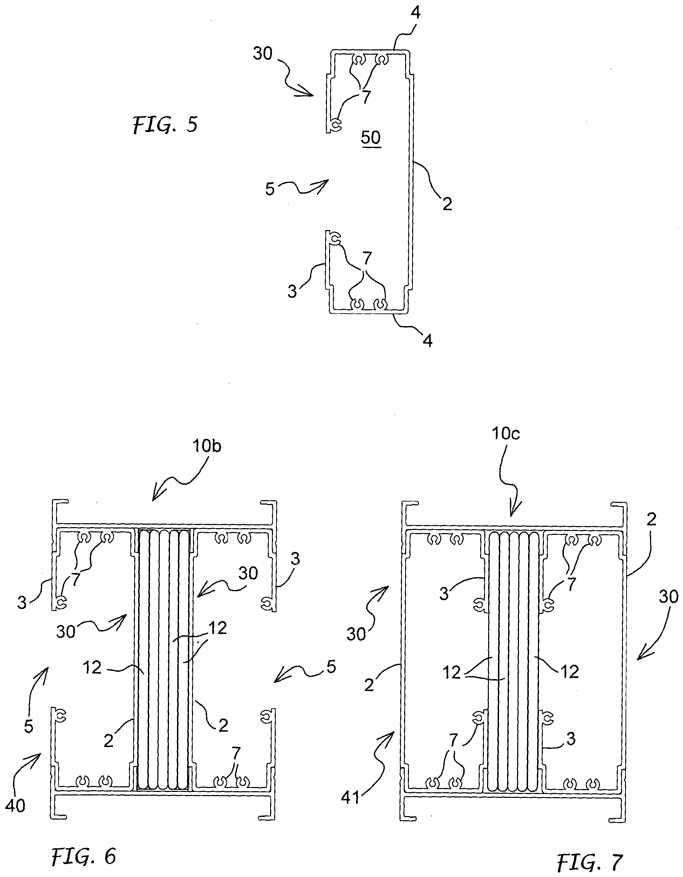

As previously mentioned, according to an alternative embodiment of the invention as illustrated with reference to the examples of Figures 5, 6 and 7, in which parts structurally and functionally corresponding to those of the above-described examples of Figures 1-4 are given the same reference numerals, the present profiled member may comprise a plurality of coupling members of the afore said type associated with a same wall of the profiled member and internal to the longitudinal channel.

Particularly, Figure 5 illustrates a profiled member 30 similar to the profiled member 1, but comprising a pair of coupling members jutting from each of the third and fourth walls 4, respectively upper and lower, i.e. associated to the joining walls, and arranged in positions symmetrical to each other, and a pair of coupling members jutting from the wall provided with afore said opening 5, namely the second side wall 3, which are also arranged in positions symmetrical to each other and particularly arranged thereon in the proximity of the opening 5, i.e. at the end portions or free portions of the second wall 3 in the proximity of the opening 5 itself.

The coupling members, as shown in the examples of the above mentioned Figures in which they are designated by number 7, have an open circular section, however, a different section can also be provided, for example a closed circular shape or a closed or open polygonal shape as previously reported, and they are completely similar to the coupling members as described with reference to Figures 1-4, to which reference is made.

Still according to the invention and similarly to what previously described, the profiled member 30 can be used in a casing for a conductive member adapted for forming busways according to a dual mode of use as shown in Figures 6 and 7, depending on the desired fire resistance.

In detail, Figure 6 shows a cross-section of a conductive member 10b comprising five conductor rails 12 accommodated inside a casing 40 having the so-called open-side configuration, in which two profiled members 30 are arranged one in front of the other with the respective openings 5 oriented outwards, i.e. away from the compartment for the conductor rails 12, while Figure 7 shows a cross-section of a conductive member 10c also comprising five conductor rails 12 accommodated inside a casing 41 having the so-called closed configuration, in which two profiled members 30 are assembled with the respective openings 5 directed towards the compartment for the conductor rails.

Yet, as previously described, the open configuration allows the casing 40 to be easily equipped with one or more fireproof panels accommodated inside the longitudinal channel 50 of each profiled member 30, which can be advantageously accessed from the respective openings 5, in order to ensure a fire resistance of 90/120 minutes at 750°C. In this case, the side apertures 5, and therefore also the channels 50 of the profiled members 30 of the casing 40, can be closed with closure panels not shown in the Figures.

Instead, said closed configuration of the casing 41 as shown in the example of Figure 7 can provide a standard fire resistance, i.e. of about 30 minutes at 750°C.

According to a further feature of the invention, the coupling members 7 provided on the upper and lower walls 4 of the profiled member 30 are arranged at a predetermined distance from each other which corresponds substantially to the width of a conductor rail 12.

This allows the profiled member 30 to be used in a casing for a conductive member comprising indifferently either four conductor rails, as in the examples of Figures 2-4, or five conductor rails, as shown in the examples of Figures 6 and 7.

In fact, the busways consist of a plurality of conducive members generally comprising four or five conductor rails of the afore said type, and the profiled member of the embodiment according to the invention as shown in Figures 5, 6 and 7 allows more conductive members to be consecutively connected and the ends of the casing for a conductive member to be closed by means of respective head covers of the above-described type regardless of the presence of four or five conductor rails, due to the two coupling members provided on the upper and lower walls, i.e the third and fourth connection walls, which allow in any case to have components available for the desired connection.

Essentially, in the case of a conductive member comprising four conductor rails, one of the coupling members of the pair of coupling members provided on such walls may be used for each upper and lower wall of each profiled member of the casing, while in the case of a conductive member comprising five conductor rails, the other of the coupling members of said pair of coupling members may be used.

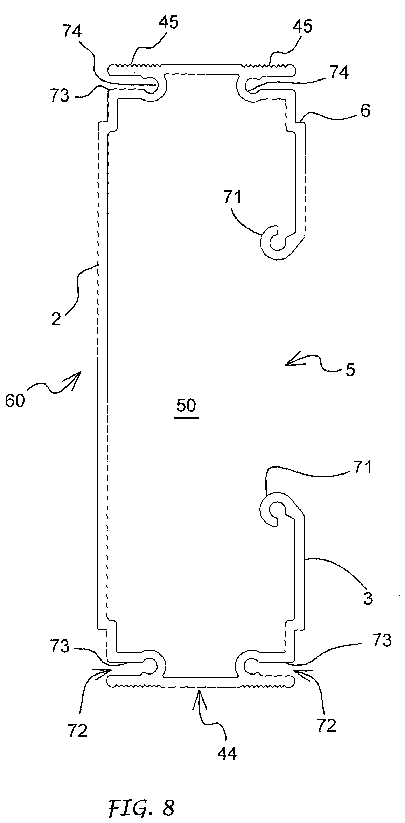

As previously mentioned, according to an alternative embodiment of the invention as shown with reference to the example of Figure 8, in which parts structurally and functionally corresponding to those of the above-described examples are given the same reference numerals, the present profiled member may include a plurality of coupling members extending parallel to the opening of the profiled member along the entire length thereof and arranged both internal and external to the longitudinal channel of the profiled member.

In particular, in the example of Figure 8, a profiled member 60 is shown which comprises a pair of coupling members 71 internal to the longitudinal channel 50 and two pairs of coupling members 72 external to longitudinal channel 50 respectively on the upper and lower walls designated by numeral 44 and provided with notched outer surface portions 45.

In detail, the coupling members 71 consist of hook-shaped ends of the free portions of the second wall 3 which define the opening 5 of the second side wall 3, whereas the coupling members 72 consist of recesses formed in the profiled member and particularly comprising a first straight portion 73 and an end throat 74.

According to the invention, the coupling members 72, and particularly the first straight portion 73 of each of them, can also be accessed through the side of the profiled member, making the combining of two of these profiled members with auxiliary profiled members of the above-described type particularly advantageous to form a casing as described above.

In fact, in this case, a profiled member can be coupled to an auxiliary profiled member 8, for example by means of nails or screws, without the need to drill the side of the profiled member 8, the nails or screws being received in the first straight portion 73 of the coupling members 72 closed by the end throat 74, and preventing chips and the like resulting from drilling of the auxiliary profiled member to reach the longitudinal channel 50, and therefore the inside of a casing made with a pair of profiled members according to the present invention and according to the above description, to which reference is made.

Of course, the end throat 74 of each coupling member 72 is intended for accommodating the respective fastening means for the combining with the head covers as previously described, so that the just-mentioned advantage of keeping chips and the like external to the longitudinal channel of the profiled member is doubled in case of puncture of the head covers.

Essentially, the coupling members 72 extending outside the longitudinal channel of the profiled member can be accessed and are adapted for receiving combining members along two directions, i.e. in front of the profiled member and through the side thereof.

The advantages of the present invention, as already clear from the description set forth above, may be summarized in that the invention provides casings for busways with a different configuration suitable for a standard fire protection or an increased fire protection, simply by assembling the two profiled members with the openings directed towards the inside or the outside of the casing, respectively.

Therefore, a single profiled member allows to obtain casings suitable for different requirements, resulting in a further advantage in terms of costs and management.

Moreover, thanks to the openings arranged on the sides of the casing and easy to be accessed, each of the profiled members of the casing, and therefore a conductive member for forming busways, is particularly easy to be equipped with fireproof panels, providing a high fire resistance fire according to the regulations [E/90-120] in a simple way.

In the embodiment illustrated with reference to the examples of Figures 5-7, the profiled member is extremely advantageous in that, in addition to being dual in the sense indicated above, it is further dual in the sense of being able to be used indifferently, for forming casings for conductive members comprising four or five conductor rails, due to the presence of a pair of coupling members provided on the upper and lower walls of the profiled members and located at a distance from each other which corresponds substantially to the width of a conductor rail.

Advantageously, the number of conductor rails in a conductive member comprising such a profiled member, and then a corresponding casing, can be varied from four to five or vice versa, simply by varying the size of the auxiliary profiled members of the casing, resulting in both an additional advantage in terms of management and a evident save of costs.

Obviously, a profiled member similar to that described above can also be used for making a casing for connection blocks.

A person skilled of the art will be able to make various changes and variations to the casing above described in the various illustrated embodimentsto satisfy contingent and specific requirements, on the other hand all contained in the protection scope of the invention as defined in the following claims.

## Claims

1. Casing (11; 20) for a busway (10), comprising:
- two profiled members (1), wherein each profiled member comprises:
- a first wall (2) and a second wall (3) defining a first pair of mutually opposite and parallel walls,
- a third wall and a fourth wall, each extending between said first and second walls (2, 3), defining a second pair of mutually opposite and parallel walls (4);
the casing being **characterized in that** said first and second pairs of walls of each of the two profiled members delimit a respective longitudinal channel (50), and **in that** one of said first and second walls (2, 3) of each of the two profiled member is provided with an respective opening (5) longitudinally extending according to the length of the respective profiled member, said opening (5) having a height lower than said first or second wall and being interposed between said third and fourth walls and arranged at predetermined relative distances therefrom;
the casing further comprising combining means (15) for assembling said profiled members;
wherein said two profiled members (1) are arranged at a predetermined distance from each other to form a compartment for a plurality of parallel conductor rails (12), and wherein said combining means (15) are substantially orthogonal to said two profiled members (1) and constitute means for closing said compartment;
and wherein said first (2) or second wall (3) provided with said longitudinally extending opening (5) of each of said two profiled members (1) is directed either towards said compartment or away from said compartment, toward the sides of the casing.

2. Casing (11, 20) according to claim 1, wherein said opening (5) is extended along the entire length of said longitudinal channel (50) at a middle position equally spaced from said third and fourth walls.

3. Casing (11, 20) according to claim 1 or 2, wherein said first and second walls include, at positions adjacent to said third and fourth walls, portions defining a step (6) extending parallel to said opening (5).

4. Casing (11, 20) according to any one of the preceding claims, further comprising at least one coupling member (7) combined with at least one of said walls and extending parallel to said opening (5) along the entire length of the profiled member.

5. Casing (11, 20) according to claim 4, wherein said at least one coupling member (7) is protruding from a respective wall inwards of said longitudinal channel, preferably with an open section.

6. Casing (11, 20) according to claim 4, wherein said at least one coupling member (7) consists of a throat or recess external to said longitudinal channel (50) of a respective wall of the profiled member.

7. Casing (11, 20) according to any one of the preceding claims, wherein said combining and closing means comprise a pair of auxiliary profiled members (15) arranged mutually opposite with respect to said two profiled members (1), each having a central wall (16) and right-angle end portions (17) fitting with a step (6) of said first or second wall of a respective profiled member.

8. Casing according to any one of the preceding claims, further comprising a fireproof panel (19) removably accommodated in said longitudinal channel (50) of at least one of said two profiled members (1) and accessible through said opening (5).

## Patentansprüche

1. Gehäuse (11; 20) für einen Stromschienenverteiler (10), umfassend:
- zwei Profilelemente (1), wobei ein jedes Profilelement umfasst:
- eine erste Wand (2) und eine zweite Wand (3), definierend ein erstes Paar gegenseitig entgegengesetzter und paralleler Wände;
- eine dritte Wand und eine vierte Wand, sich erstreckend zwischen der ersten und der zweiten Wand (2, 3), definierend ein zweites Paar gegenseitig entgegengesetzter und paralleler Wände (4),
wobei das Gehäuse **dadurch gekennzeichnet ist, dass** das erste und das zweite Paar an Wänden eines jeden der zwei Profilelemente einen jeweiligen Längskanal (50) abgrenzt, und dadurch, dass eine der ersten und zweiten Wände (2, 3) eines jeden der zwei Profilelemente mit einer jeweiligen Öffnung (5) versehen ist, die sich längs gemäß der Länge des jeweiligen Profilelements erstreckt, wobei die Öffnung (5) eine Höhe aufweist, die geringer ist als die der ersten oder zweiten Wand, und zwischen der dritten und vierten Wand eingesetzt und in vorgegebenen jeweiligen Abständen zu diesen angeordnet ist,
wobei das Gehäuse zudem Kombinationsmittel (15) umfasst, um die Profilelemente zusammenzubauen,
wobei die zwei Profilelemente (1) in einem vorgegebenen Abstand voneinander angeordnet sind, um eine Unterteilung für eine Vielzahl parallel angeordneter Leiterschienen (12) zu formen, und wobei die Kombinationsmittel (15) im Wesentlichen im rechten Winkel zu den zwei Profilelementen (1) angeordnet sind und Mittel zum Verschließen der Unterteilung darstellen,
und wobei die erste (2) oder die zweite Wand (3), versehen mit der sich längsseitig erstreckenden Öffnung (5) eines jeden der zwei Profilelemente (1) entweder hinführend zur Unterteilung oder wegführend von der Unterteilung hinführend zu den Seiten des Gehäuses gerichtet ist.

2. Gehäuse (11, 20) nach Anspruch 1, wobei sich die Öffnung (5) entlang der gesamten Länge des Längskanals (50) an einer mittigen Position gleich beabstandet von der dritten und vierten Wand erstreckt.

3. Gehäuse (11, 20) nach Anspruch 1 oder 2, wobei die erste und die zweite Wand an Positionen, die an die dritte und vierte Wand angrenzen, Positionen einschließen, die eine Stufe (6) definieren, sich erstreckend parallel zur Öffnung (5).

4. Gehäuse (11, 20) nach einem der vorhergehenden Ansprüche, zudem umfassend mindestens ein Kupplungselement (7), kombiniert mit mindestens einer der Wände und sich erstreckend parallel zur Öffnung (5) entlang der gesamten Länge des Profilelements.

5. Gehäuse (11, 20) nach Anspruch 4, wobei das mindestens eine Kupplungselement (7) aus einer jeweiligen Wand nach innen gerichtet des Längskanals hervortritt, vorzugsweise mit einem offenen Abschnitt.

6. Gehäuse (11, 20) nach Anspruch 4, wobei das mindestens eine Kupplungselement (7) aus einer Verengung oder Vertiefung besteht, außerhalb des Längskanals (50) einer jeweiligen Wand des Profilelements.

7. Gehäuse (11, 20) nach einem der vorhergehenden Ansprüche, wobei die Kombinations- und Verschließmittel ein Paar Hilfsprofilelemente (15) umfassen, die gegenseitig entgegengesetzt zu den zwei Profilelementen (1) angeordnet sind und jeweils eine mittlere Wand (16) und Endabschnitt (17) im rechten Winkel aufweisen, passend zu einer Stufe (6) der ersten oder zweiten Wand des jeweiligen Profilelements.

8. Gehäuse nach einem der vorhergehenden Ansprüche, zudem umfassend ein feuerfestes Paneel (19), entfernbar untergebracht im Längskanal (50) von mindestens einem der zwei Profilelemente (1) und zugänglich durch die Öffnung (5).

## Revendications

1. Enveloppe (11 ; 20) pour une barre blindée (10), comprenant :
- deux éléments profilés (1), dans laquelle chaque élément profilé comprend :
- une première paroi (2) et une seconde paroi (3) définissant une première paire de parois mutuellement opposées et parallèles,
- une troisième paroi et une quatrième paroi, chacune se prolongeant entre lesdites première et seconde parois (2, 3), définissant une seconde paire de parois mutuellement opposées et parallèles (4) ;
l'enveloppe étant **caractérisée en ce que** lesdites première et seconde paires de parois de chacun des deux éléments profilés délimitent un canal longitudinal (50) respectif, et **en ce que** l'une desdites première et seconde parois (2, 3) de chacun des deux éléments profilés est pourvue d'une ouverture (5) respective se prolongeant longitudinalement selon la longueur de l'élément profilé respectif, ladite ouverture (5) ayant une hauteur inférieure à ladite première ou seconde paroi et étant interposée entre lesdites troisième et quatrième parois et disposée à des distances relatives prédéterminées de celle-ci ;
l'enveloppe comprenant de plus des moyens de combinaison (15) pour assembler lesdits éléments profilés ;
dans laquelle lesdits deux éléments profilés (1) sont disposés à une distance prédéterminée l'un de l'autre pour former un compartiment pour une pluralité de rails conducteurs parallèles (12), et dans laquelle lesdits moyens de combinaison (15) sont substantiellement orthogonaux auxdits deux éléments profilés (1) et constituent des moyens de fermeture dudit compartiment ;
et dans laquelle ladite première (2) ou seconde paroi (3), pourvue de ladite ouverture se prolongeant longitudinalement (5) de chacun desdits deux élément profilés (1), est orientée soit en direction dudit compartiment soit éloignée dudit compartiment, vers les côtés de l'enveloppe.

2. Enveloppe (11, 20) selon la revendication 1, dans laquelle ladite ouverture (5) se prolonge le long de toute la longueur dudit canal longitudinal (50) à une position médiane équidistante desdites troisième et quatrième parois.

3. Enveloppe (11, 20) selon la revendication 1 ou 2, dans laquelle lesdites première et seconde parois incluent, en correspondance de positions adjacentes auxdites troisième et quatrième parois, des parties définissant un pas (6) se prolongeant parallèlement à ladite ouverture (5).

4. Enveloppe (11, 20) selon l'une quelconque des revendications précédentes, comprenant de plus au moins un organe d'accouplement (7) combiné à au moins une desdites parois et se prolongeant de façon parallèle à ladite ouverture (5) le long de toute la longueur de l'élément profilé.

5. Enveloppe (11, 20) selon la revendication 4, dans laquelle ledit au moins un organe de d'accouplement (7) dépasse d'une paroi respective vers l'intérieur dudit canal longitudinal, de préférence avec une section ouverte.

6. Enveloppe (11, 20) selon la revendication 4, dans laquelle ledit au moins un élément d'accouplement (7) consiste en une gorge ou un renfoncement extérieur au dit canal longitudinal (50) d'une paroi respective de l'élément profilé.

7. Enveloppe (11, 20) selon l'une quelconque des revendications précédentes, dans laquelle lesdits moyens de combinaison et de fermeture comprennent une paire d'éléments profilés auxiliaires (15) mutuellement disposés de façon opposée par rapport auxdits deux éléments profilés (1), chacun ayant une paroi centrale (16) et des parties terminales orthogonales (17) correspondant à un pas (6) desdites première ou seconde paroi d'un élément profilé respectif.

8. Enveloppe (11, 20) selon l'une quelconque des revendications précédentes, comprenant de plus un panneau (19) résistant au feu logé de façon amovible dans ledit canal longitudinal (50) d'au moins un desdits deux éléments profilés (1) et accessible à travers ladite ouverture (5).
